Europäisches Patentamt

European Patent Office

Office européen des brevets

(11) Publication number: **0 253 504**
**A1**

## (12) EUROPEAN PATENT APPLICATION

(21) Application number: **87305272.4**

(22) Date of filing: **15.06.87**

(51) Int. Cl.⁴: **G01F 1/80 , G01F 1/84**

(30) Priority: **16.07.86 GB 8617415**

(43) Date of publication of application:
**20.01.88 Bulletin 88/03**

(84) Designated Contracting States:
**AT BE CH DE ES FR GR IT LI NL SE**

(71) Applicant: **SCHLUMBERGER ELECTRONICS (U.K.) LIMITED**
**124 Victoria Road**
**Farnborough Hampshire GU14 7PW(GB)**

(72) Inventor: **Stansfeld, James Wolryche**
**58, kings Hill**
**Beach N. Alton Hants(GB)**
Inventor: **Atkinson, David Ian**
**6, Dollis Drive**
**Farnham Surrey(GB)**

(74) Representative: **Holt, Michael**
**Schlumberger Electronics (UK) Limited 124**
**Victoria Road**
**Farnborough Hampshire GU14 7PW(GB)**

(54) **Mass flowmeter.**

(57) A straight tube mass flowmeter includes upstream and downstream transducers (18, 20) arranged such that phase difference between vibration occurring at the positions of their placement may be measured. By virtue of Coriolis effects which occur when a fluid flows in the tube (6), this phase difference is a function of mass flow within the tube (6). Unfortunately the function is non-linear and sometimes has a fold back characteristic with the result that massflow cannot be uniquely determined. In an improved straight tube mass flowmeter in accordance with the present invention, the tube is vibrated at resonance and the resonant frequency measured. By taking the ratio of phase difference to resonant frequency, an output more conveniently related to massflow is provided, this output being a substantially linear function of mass flow.

FIG.1

EP 0 253 504 A1

## MASS FLOWMETER

The present invention relates to a meter for measuring the mass flow rate of a fluid.

More particularly the present invention concerns a mass flowmeter wherein the sensing means is a vibrating straight tube through which the fluid to be measured flows.

A first type of mass flowmeter consists in a flowmeter combined with a density meter. The information delivered by these two separate meters is processed in order to furnish a mass flow indication. Such flowmeters include parts by wehich are located across the flowline such as turbines and as a result this first type of mass flowmeter is not adapted to the measurement of fluids including solid contaminents, sludge or similar materials.

A second type of mass flowmeter includes a non-straight tube, for example a 'U' tube through which the fluid to be metered flows. Such mass flowmeters are based on the Coriolis force which is developed in the fluid due to the U shape of the tube. The main drawback of this second type of flowmeter that if the fluid is abrasive the tube is very sensitive to erosion. It also exhibits a high pressure drop and pour reliability.

In order to overcome these drawbacks the European patent application number 84 200 115 filed on 30th January 1984 describes a mass flowmeter wherein the sensing means is a straight vibrating tube assembly clamped at two ends. The fluid to be measured flows through this tube. The phase difference which occurs between the upstream and downstream parts of the vibrating tube assembly is measured. This phase difference is representative of the mass flow of the fluid.

Such a mass flowmeter theoretically can be used for monitoring a multi-phase flow even if this fluid includes abrasive material such as sand, or gas phases.

Unfortunately if appears that the phase difference does not vary linearly with the mass flow of the fluid to be measured. In fact it hs been found that in some configurations such a mass flowmeter exhibits a foldback characteristic, such that there is ambituity at some outputs, which serves to restrict the range of operation in most applications.

An object of the present invention is to provide a mass flowmeter of the straight vibrating tube type which actually performs a linear relationship between the measured values and the mass flow of the fluid.

Another object of the invention is to provide a mass flowmeter of the above type wherein the signal to noise ratio is improved.

Still another object of the invention is to provide a mass flowmeter of the above type having an increased sensitivity.

According to the present invention the mass flowmeter comprises a straight tube through which the fluid to be metered flows, means for clamping the two ends of said tube, exciting means for vibrating said tube at a resonance frequency, first and second pick-up means to detect the vibrations of the tube at an upstream place and at a downstream place, and processing means or calculating the phase difference between the signals delivered by said two pick-up means, and it is characterised in that said processing means further comprises means for measuring the resonance frequency of the tube wherein said fluid flows, and means for providing a value proportional to the ratio between said measured phase difference and said resonance frequency, whereby a linear relationship exists between said processed value and the mass flow of the fluid to be metered.

These and other objects and features of the present invention will be more readily apparent from the following detailed description, wherein reference is made to the accompanying drawings in which:

Figure 1 is a representation of a first embodiment of the mass flowmeter according to the invention;

Figure 2 shows a preferred embodiment of the drive means for vibrating the tube of the mass flowmeter,

Figure 3 represents a diagram showing the relationship between the valves of the ration A (ration of the phase difference to resonant frequency) and the mass flow rate M for difference liquid densities; and

Figure 4 is a representation of a second embodiment of the mass flowmeter according to the present invention.

Before describing in detail the preferred embodiments of the invention the principle of the invention will be explained. It is well known that in a vibrating tube which is clamped at its two ends, the passage of fluid produces a phase difference between the transverse displacements of the upstream end of the tube and its downstream end. This phase difference is due to the fact that between two nodal sections of the tube, the Coriolis force decreases the apparent tube stiffness over the first half of this portion of the tube and increases the apparent stiffness in the second half of this tube portion.

Experiments conducted by the applicant have revealed that the mass flow rate of the fluid passed through the tube is a linear function the ratio A of the phase difference to the resonant frequency of the tube.

The coefficients of this linear relationship are independant of the type and the flow rate of the fluid. The mass flowmeter according to the invention is based on this particular relationship.

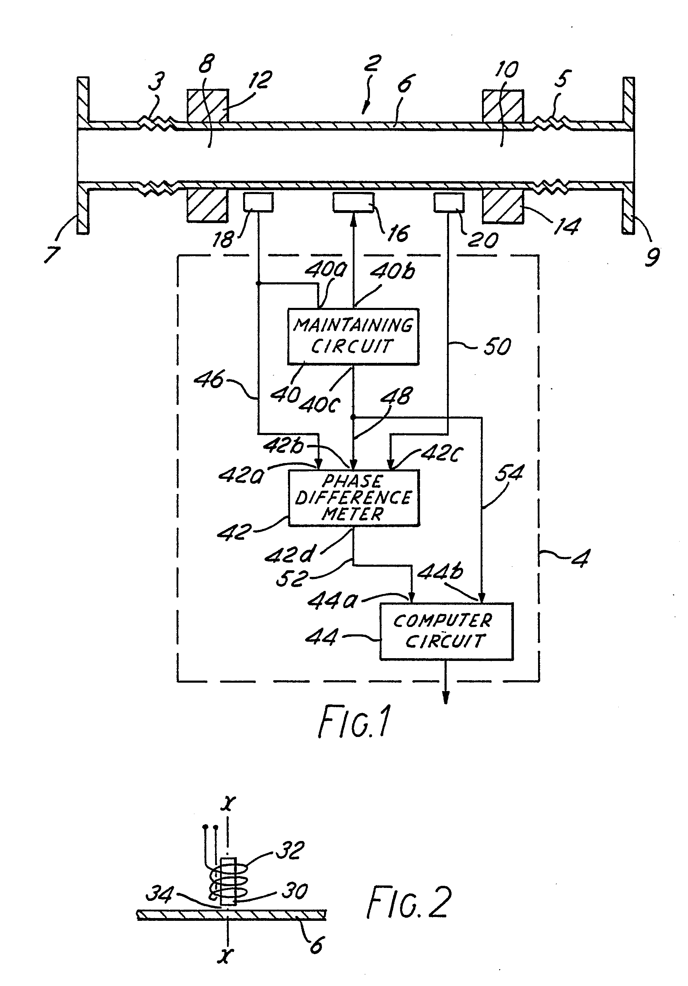

Figure 1, shows a general representation of a first embodiment of the mass flowmeter according to the invention. The meter comprises sensing means 2 and processing means 4 for processing the signals delivered by the sensing means 2.

Considering firstly the sensing means 2, they comprise a straight vibrating tube 6. The tube 6 is substantially cylindrical in shape and its two ends 8 and 10 are opened. Preferably the tube 10 is made of a ferromagnetic material so as to be able to interact directly with a magnetic drive assembly which will be described hereinafter. Alternatively a piezo-electric drive system may be employed. Moreover preferably this material has a low coefficient of thermal expansion.

The two tube ends 8 and 10 are secured to clamping rings 12 and 14. The clamping rings 12 and 14 are heavy enough so that the two tube ends remain motionless when the tube 6 vibrates frequencies. As a result the tube 6 acts as if if where clamped at its two ends 8 and 10. The fluid to be measured, flows through the tube 6.

In order to permit the connection of the tube 6 with the main line through which the fluid flows, the ends 8 and 10 of the tube are sealingly connected to cylindrical bellows 3 and 5, and the bellows 3 and 5 are respectively connected to flanges 7 and 9. The flanges 7 and 9 are adapted to be connected to the main line by convenient means. The bellows perform two functions: they can absorb the thermal length expansion of the tube 6 and the external pipes of the line; and they void the noise of the main line to be transmitted to the tube 6. The fluid to be measured flows through the tube 6.

The sensing means 2 further comprises driving means 16 for vibrating the tube 6 and pick-up means 18 and 20 for detecting the vibrations of tube 6. Preferably the present embodiment the tube 6 is vibrated corresponding to odd vibration modes that is fundamental (mode 1), second overtone (mode 3), fouth overtone (mode 5) etc., the mode number being the number of half wavelengths between the clamped ends.

The axis of the driving means is a diametrical line of the tube 6 located halfway between the ends 8 and 10 of the tube. The two pick-up means 18 and 20 are placed symmetrically with respect to the drive means 16. Furthermore the axes of the two pick-up means 18 and 20 are located in a common half diametrical plane of the tube. The purpose of these two pick-up means is to detect the displacements of the vibrating tube at the points where they are placed.

Figure 2 shows a preferred embodiment of the driving means 16. It comprises a motionless permanent magnet 30. The axis xx of the magnet 30 is normal to the wall of the tube 6. An electric coil 32 is wound about the magnet 30. A small gap 34 (eg 0.1mm) is provided between the magnet 30 and the tube wall 6. When an alternating voltage is applied to the coil terminals, an alternating magnetic field is created within the gap 34. As a result the ferromagnetic tube is submitted to an alternating magnetic field which produces the vibrations of the tube 6 at a frequency corresponding to the frequency of the alternative current. It is to be noted that no part of the drive means 16 are fixed to the tube. As a result, the properties of the tube 6 are not disturbed and there is no problem of bonding or welding.

The same device can be used as pick-up means. The coil 32 is supplied with a direct voltage. Variations of the gap 34 which are due to the vibration of the tube produce a modulation of the direct voltage. The modulation frequency is equal to the tube vibration frequency.

Considering now the processing unit 4, it essentially comprises a maintaining circuit 40 for maintaining the tube vibration frequency in resonance, a phase difference meter 42 to measure the phase difference between the signals supplied by the pick-up means 18 and 20, and a calculating unit 44 for calculating the mass flow rate.

The maintaining circuit 40 has a first output 40b which is connected to the driving means 16 and an input 40a connected to the pick-up mean 18. Maintaining circuits for maintaining the vibration of a vibrating member at a resonant frequency are well known, they essentially comprise an amplifier which receives on its input the signal delivered by the pick-up 18. The signal appearing at the output of the amplifier is applied to the drive means 16. The amplifier is designed to introduce the appropriate phase shift between the pick-up signal and the drive signal in order to sustain the vibration frequency. Thus the tube 6 vibrates at a resonant frequency of the tube containing the fluid. The second output 40c of the maintaining circuit 40 supplies a signal having a frequency equal to that of the tube resonant vibrations.

Considering now the phase difference meter 42, this meter comprises a first input 42a connected via lead 46 to the first pick-up 18, a second input 42b connected via lead 48 to the output 40c of the maintaining circuit 40, and a third input 42c connected via lead 50 to the second pick-up 20. The phase difference meter 42 performs two functions. In a first step the signals applied to its inputs 42a and 42c are filtered by two narrow pass band filters having a center frequency which is controlled by the signal delivered by the maintaining circuit 40. In other words, the signal supplied by the pick-up 18 and 20 are filtered by filters having a center frequency which is equal to that frequency. In a second step the phase difference of the two filtered signals is measured and the phase difference value is supplied at the output 42d of the meter 42.

It is to be noted that the pick-up 18 is used for supplying the maintaining circuit 40 with an information representative of the vibration frequency of the tube. It is also used for supplying the phase difference meter with one of the two signals which define the phase difference. Alternatively separate drive and pick-up sensors may be used.

Turning now to the calculating circuit 44, this circuit receives a first input 44a which is connected via lead 52 to the output 42d of the meter 42 and a second input 44b which is connected via lead 54 to the output 40c of the circuit 40. As a result the calculating circuit 44 recevies the phase difference value and the tube resonant frequency value. The circuit 44 is designated to calculate the ratio A of the phase difference W Ø to the resonant frequency (F).

$$A = \frac{W\ \emptyset}{F} \qquad (1)$$

As previously explained, the mass flow rate M is a linear function of the ratio A.

$$M = a\,A + b \qquad (2)$$

Wherein $\underline{a}$ and $\underline{b}$ are constants which depends neither on the nature of the fluid nor on the flow rate of the fluid. The calculating circuit is adapted to calculate the value of M as a function of the previously calculated ratio A.

In fact the constants $\underline{a}$ and $\underline{b}$ depend on the pressure of the fluid. As this dependency between the density and the pressure is well known, the calculating means may comprise compensation means to take into account the pressure of the fluid.

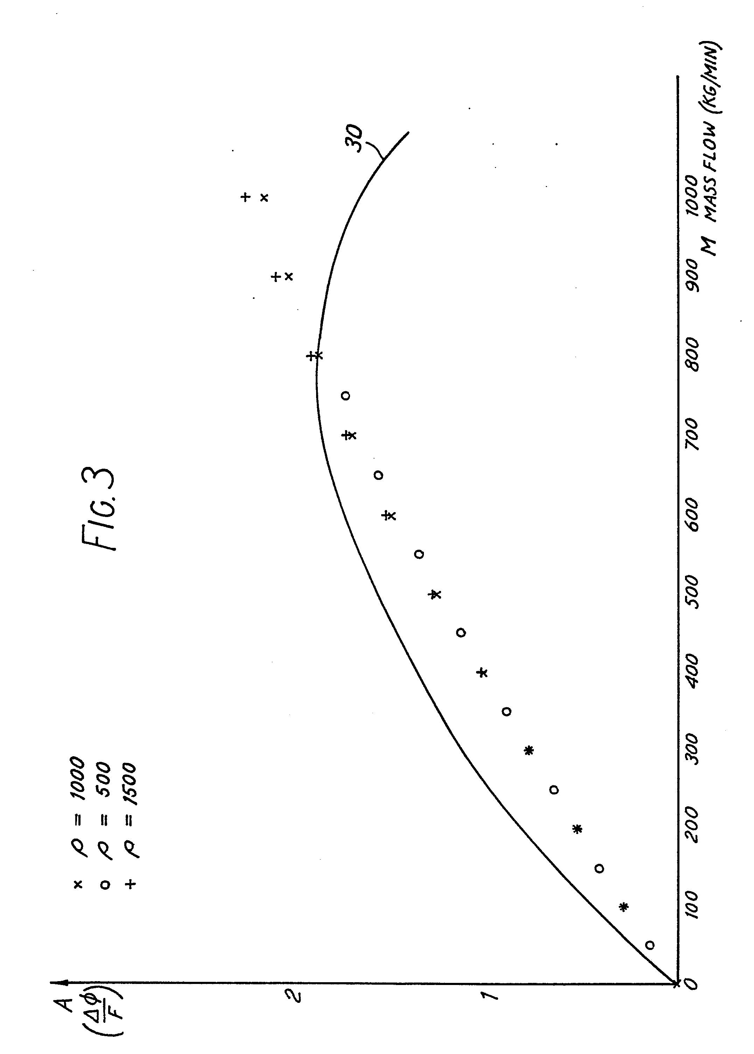

Figure 3 shows the actual relationship between the ratio A as hereinabove defined, and the mass flow rate M, obtained with the mass flowmeter according to the invention. The mass flowmeter has the following features.

| | | |
|---|---|---|
| Young's Modulus | $1.81 \times 10$" | $\mathrm{Nm}^{-2}$ |
| Vibrating length of the tube | 0.66m | 0.66 |
| Inside radius of the tube | 0.0118m | 0.0118 |
| Outside radius of the tube | 0.0127m | 0.0127 |

As indicated in Figure 3, the plotted points correspond to three fluids having different densities. This diagram clearly shows that the linear relationship is independant of the type of the fluid and the flow rate of the fluid. Superimposed on Figure 3 is a typical characteristic of a prior art flowmeter (30), (phase difference plotted to an arbitary scale). This characteristic shows that readings above 600 Kg/min are ambiguous. It will be appreciated that the present invention probides a linear response sensor having a range extending unambiguously up to 1000 Kg/min.

Another important feature of the invention relates to the positions of the pick-up 18 and 20. According to the invention the two pick-ups 18 and 20 should preferably be located in accordance with the following relationship.

$$1 = k \times L$$

wherein L is the length of the vibrating part of the tube, $\underline{1}$ the distance between the two pick-ups, and k a coefficient approximately equal to 0.8. It is desirable that the pick-up position does not approach the tube ends. Furthermore this positioning has been found to be advantageous, sensitivity being a function of position.

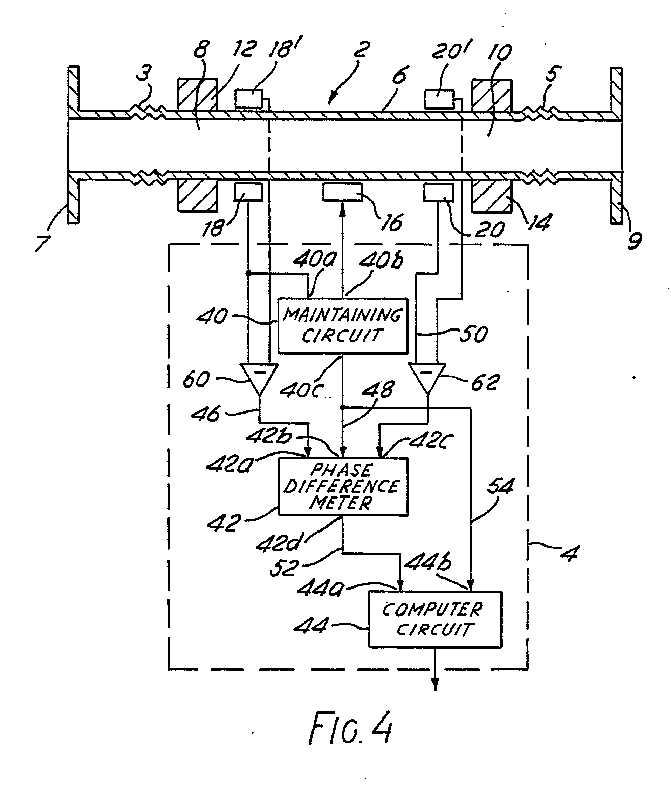

Figure 4 shows a second embodiment of the mass flowmeter according to the invention. This second embodiment is very similar to the first one. In figure 4 the parts of the meter which are common to the two embodiments are referenced with the same numbers.

The meter of Figure 4 further includes a third and a fourth pick-up which are numbered 18' and 20'. Pick-up 18 is diametrically opposed to pick-up 18, and pick-up 20' is diametrically opposed to pick-up 20. The outputs of pick-up 18 and 18' are connected to the two inputs of a first difference amplifier 60 and the outputs of pick-up 20 and 20' are connected to the two input of a second difference amplifier 62. As a result the signal supplied by the circuit 60 or 62 has exactly the same frequency and the same phase as the signal supplied by pick-up 18 or 20, but the amplitude of these signals is multiplied by two. The output of the circuit 60 is connected to the input 40a of the maintaining circuit 40 and to the input 42a of the phase difference meter 42. Similarly the output of the circuit 62 is connected to the input 42c of the phase difference meter 42.

In the embodiments which are hereinabove described the vibrating tube is excited at a resonant frequency, or more precisely at a resonant frequency of the tube filled with fluid.

It can be more convenient to excite the tube at an other frequency corresponding for example at the mode 3. In this case no feature of the invention is changed except the following ones.

The maintaining circuit is slightly changed to sustain the mode 3 resonant frequency. The calculating unit is also slightly modified. The coeffients $a$ and $b$ of the equation (2) are to be replaced by coefficient a' and b' which are different.

The mode 3 excitation involves the following improvements: the factor Q of the vibrating system is substantially increased (from about 300 to about 2000) the noise is substantially decreased.

## Claims

1. A mass flowmeter comprising:-
a straight tube through which the fluid to be metered flows means for establishing nodes at two ends of the tube; exciting means for vibrating said tube at a resonant frequency; first and second pick-up means to detect the vibrations of the tube at an upstream place and at a downstream place, and processing means for calculating the phase difference between the signals delivered by said first and second pick-up means, said flowmeter being characterised in that said processing means further comprises means for measuring the resonant frequency of the tube when said fluid flows and means for calculating the value of predetermined linear function of the ratio of said measured phase difference to said resonant frequency whereby said calculated value is a measurement of the mass flow rate of the fluid.

2. A mass flowmeter according to claim 1, characterised in that said two pick-up means are equally spaced about the centre plane of the vibrating tube, and the spacing between said two pick-up means is within the range of 80 percent of the whole vibrating length of the tube.

3. A mass flowmeter according to anyone of the preceding claims, characterised in that said pick-up means are of the electromagnetic type, without contact with said well tube.

4. A mass flowmeter for substantially as hereindescribed with reference to the accompanying drawings.

FIG.1

FIG.2

FIG.3

× ρ = 1000
o ρ = 500
+ ρ = 1500

30

0 253 504

FIG. 4

| | | | |
|---|---|---|---|
| | **DOCUMENTS CONSIDERED TO BE RELEVANT** | | EP 87305272.4 |

| Category | Citation of document with indication, where appropriate, of relevant passages | Relevant to claim | CLASSIFICATION OF THE APPLICATION (Int. Cl.4) |
|---|---|---|---|
| D,A | EP - A1 - 0 119 638 (SHELL)<br>  * Page 2, line 24 - page 5, line 29; fig. * | 1,2 | G 01 F 1/80<br>G 01 F 1/84 |
| P,A | DE - A1 - 3 505 166 (DANFOSS A/S)<br>  * Abstract; column 5, line 47 - column 7, line 2; fig. 1 * | 1-3 | |
| A | SOVIET INVENTIONS ILLUSTRATED, section E1, week 8405, March 14, 1984<br>DERWENT PUBLICATIONS LTD, London S 02<br>  * SU 1 008 617-A (AS AZERB) * | 1-3 | |
| A | US - A - 4 491 025 (SMITH et al.)<br>  * Fig. 1 * | 1-3 | **TECHNICAL FIELDS SEARCHED (Int. Cl.4)**<br><br>G 01 F 1/00 |

| The present search report has been drawn up for all claims | | |
|---|---|---|
| Place of search<br>VIENNA | Date of completion of the search<br>22-09-1987 | Examiner<br>BURGHARDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82